Europäisches Patentamt

European Patent Office

Office européen des brevets

(11) Publication number: **0 552 546 A1**

# EUROPEAN PATENT APPLICATION

(21) Application number: 92311293.2

(22) Date of filing: **10.12.92**

(51) Int. Cl.⁵: **C08L 67/02**, //(C08L67/02, 67:02)

(30) Priority: **27.12.91 JP 360388/91**

(43) Date of publication of application:
**28.07.93 Bulletin 93/30**

(84) Designated Contracting States:
**DE ES FR GB IT NL**

(71) Applicant: **GE PLASTICS JAPAN LIMITED**
**7-2, 3-Chome, Nihonbashi-Honcho**
**Chuo-Ku, Tokyo(JP)**

(72) Inventor: **Yokoshima, Takahiro**
**102 Park Hills, 1640-2 Uehara, Fukara**
**Susono City, Sizuoka Prefecture(JP)**

(74) Representative: **Pratt, Richard Wilson et al**
**London Patent Operation G.E. Technical**
**Services Co. Inc. Essex House 12/13 Essex**
**Street**
**London WC2R 3AA (GB)**

(54) **Polybutylene terephthalate resin compositions.**

(57) Polybutylene terephthalate resin compositions comprising :
(A) 60-99% of polybutylene terephthalate having a number-average molecular weight (Mn) larger than 40,000 but less than 60,000, and a weight-average molecular weight (Mw) of more than 130,000 but less than 160,000, and
(B) 1-40 wt% of polybutylene terephthalate having a number-average molecular weight (Mn) larger than 21,000 but less than 27,000, and a weight-average molecular weight (Mw) larger than 40,000 but less than 65,000 have a good resistance to repeated fatigue in the molded product, a good fluidity in the molten state and a good moldability.

EP 0 552 546 A1

This invention relates to polyester resin compositions having an excellent tensile elongation and moldability. More specifically, it relates to polyester resin compositions suitable for molded items having a hinge portion, a snap-fit portion or a recessed portion, and for the insulating plastic on curled cords that connect the handset on a telephone with the telephone itself.

One reason why resins are widely used as molding materials is that molded products having complex shapes can be integrally molded from these. Recently, however, products requiring repeated reverse deformability during use have been on the rise. These include food storage packs in which the cover is connected to the pack with a band-type hinge; the covers in box-like molded products such as electric wiring fuse cases and connectors where the cover bends 180 degrees from the hinge portion and closes at a snap-fitting portion; and products designed to close by means of a hinge and a snap-fitting portion, such as the covers of gloveboxes and small storage receptacles on the instrument panels of automobiles, and the covers on recessed switchboxes in TVs, air conditioners and the like.

Materials that are used for these molded bodies include polyethylene, polypropylene and polybutylene terephthalate, which have excellent repeated fatigue properties up to failure, even in the deformation region that exceeds the reversible amount of deformation. Of these, polybutylene terephthalate (PBT) has a heat resistance and mechanical strength which cannot be achieved with polyethylene and polypropylene, and so related applications are expected to be developed for this material. However, PBT having sufficient repeated fatigue properties must have quite a high molecular weight. Because the melt flow properties are low, the integral molding of products with a shape having a hinge portion was difficult.

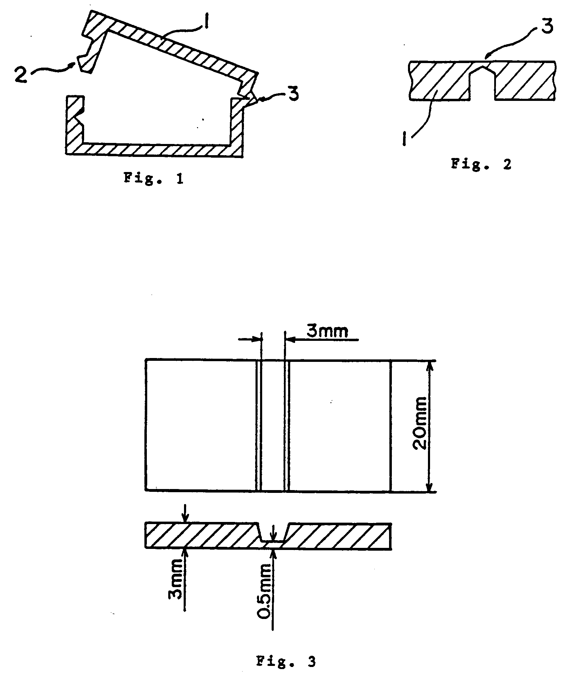

For example, in cases where a molded product (1) having a snap fitting portion (2) and a hinge portion (3) like that shown in Fig. 1 is filled with molten resin and integral molding is carried out, when a metal gate is provided on one edge, the molten resin that has entered from the gate passes through the hinge portion, reaches the other edge, and must flow until it fills the entire body. Hence, low-viscosity (low-molecular-weight) resins have been used in the past, as a result of which problems arose during use, such as the cracking of hinges and the breaking of snap fitting portions. Moreover, because plasticizers and the like were added, the mechanical strength and heat resistance declined, which was undesirable. To prevent these problems, it was necessary to mold these separately then connect them with a hinge.

This invention was conceived based on the above problems. It provides excellent polybutylene terephthalate resin compositions that improve the resistance to repeated fatigue of the molded product and have high flow properties in the molten state.

The present invention is a polybutylene terephthalate resin composition comprising:

[A] 60-99% of polybutylene terephthalate having a number-average molecular weight (Mn) larger than 40,000 but less than 60,000, and a weight-average molecular weight (Mw) of more than 130,000 but less than 160,000, and

[B] 1-40 wt% of polybutylene terephthalate having a number-average molecular weight (Mn) larger than 21,000 but less than 27,000, and a weight-average molecular weight (Mw) larger than 40,000 but less than 65,000.

That is, by blending low-molecular-weight polybutylene terephthalate in polybutylene terephthalate having a sufficiently high molecular weight to a degree where such features of polybutylene terephthalate as heat resistance and mechanical strength are not lost, the resistance to repeated fatigue of the molded body is improved and polybutylene terephthalate resin compositions having excellent flow properties in a molten state are provided,

The various molecular weights here have been measured by means of gel permeation chromatography (polystyrene reference).

In cases where just high-molecular-weight polybutylene terephthalate (A) is used, the resistance to repeated fatigue is good, but the flow properties in the molten state are low, When just low-molecular-weight polybutylene terephthalate (B) is used, moldability is good because the flow properties in the molten state are good, but the resistance to repeated fatigue of the molded product drops notably. When polybutylene terephthalate of a molecular weight that does not belong to (A) or (B) is used, both the flow properties in the molten state and the resistance to repeated fatigue of the molded body are inferior.

Small amounts of other aromatic dicarboxylic acid components, alicyclic dicarboxylic acid components or other diol components may be copolymerized in the polybutylene terephthalate used in this invention. Examples that may be cited here of other aromatic dicarboxylic acid components include isophthalic acid, o-phthalic acid, 1,5-naphthalenedicarboxylic acid, naphthalene-2,5-dicarboxylic acid, naphthalene-2,6-dicarboxylic acid, biphenyl-3,3'-dicarboxylic acid, biphenyl-4,4'-dicarboxylic acid, diphenylether-4,4'-dicarboxylic acid, diphenylmethane-4,4'-dicarboxylic acid, diphenylsulfone-4,4'-dicarboxylic acid, diphenylisopropylidene-4,4'-dicarboxylicacid, 1,2-bis(phenoxy)ethane-4,4'-dicarboxylic acid, anthracene-2,5-dicarboxylic acid, p-terphenylene-4,4'-dicarboxylic acid, pyridine-2,5-dicarboxylic acid, adipic acid, azelaic acid, dodecanedioic

2

acid and sebacic acid. Examples of alicyclic dicarboxylic acid components that may be cited include cyclohexanedicarboxylic acid.

Examples of other diol components that may be cited include aliphatic diols such as ethylene glycol, propylene glycol, hexylene glycol, neopentyl glycol, 2-methylpropane-1,3-diol, diethylene glycol and triethylene glycol; alicyclic diols such as cyclohexane-1,4-dimethanol, and mixtures thereof.

In the present invention, additives commonly used in polyester molded products, such as lubricants, stabilizers, plasticizers, and dyes and pigments (coloring agents); resin components such as PET, PCT, PC, high-butadiene-containing ABS, AS, PS, polyethylene, PP, EVA and EEA; and elastomer components such as MBS, ABS, acrylate rubber and polyester elastomer may be added as desired, provided this is done without compromising the properties of the polybutylene terephthalate.

The present invention shall now be illustrated more concretely by means of the examples given below, although it shall be understood that these examples in no way limit the scope of the invention.

Examples

Examples 1 and 2, Comparative Examples 1-5

The molecular weights of the polybutylene terephthalate used in the examples and comparative examples are indicated below.

Polybutylene terephthalate (A):
number-average molecular weight (Mn) -- 45,000
weight-average molecular weight (Mw) -- 137,000
Polybutylene terephthalate (B):
number-average molecular weight (Mn) -- 25,000
weight-average molecular weight (Mw) -- 52,000
Polybutylene terephthalate (C):
number-average molecular weight (Mn) -- 39,000
weight-average molecular weight (Mw) -- 104,000
Polybutylene terephthalate (D):
number-average molecular weight (Mn) -- 29,000
weight-average molecular weight (Mw) -- 70,000

Table 1 shows the results obtained in Examples 1 and 2, and Comparative Examples 1-5.

Table 1

|  | Comparative examples | | | | | Examples | |
|---|---|---|---|---|---|---|---|
|  | 1 | 2 | 3 | 4 | 5 | 1 | 2 |
| PBT (A) | 100 |  |  |  | 50 | 80 | 75 |
| PBT (B) |  | 100 |  |  |  | 20 | 25 |
| PBT (C) |  |  | 100 |  |  |  |  |
| PBT (D) |  |  |  | 100 |  |  |  |
| Evaluation of moldability | X | ● | O | ● | O | O | ● |
| Melt flow index (250° C, 5 kg) | 10 | 280 | 30 | 80 | 28 | 27 | 40 |
| Tensile elongation (%) | >500 | 7 | 100 | 30 | 80 | >300 | 280 |
| Repeated hingeability (200° C) | >2000 | 30 | 1000 | 100 | 500 | >2000 | >2080 |
| (-200° C) | >2000 | 10 | 500 | 20 | 300 | >2000 | 1900 |
| Evaluation of hingeability | ● | X | X | X | X | ● | ● |

As is apparent from Table 1, the polybutylene terephthalate resin compositions of this invention have a good resistance to repeated fatigue in molded products. In addition, because the flow properties in the molten state are adequate, the moldability is also good.

In Table 1, the evaluation of moldability is based on whether, when the molded body in Fig. 3 is formed, polybutylene terephthalate can be molded without undue difficulty at the temperature generally used for injection molding (260° C) without giving rise to short shots, burrs, sink marks or the like.

The repeat hingeability was evaluated by fixing in place one end of the molded body in Fig. 3 and carrying out repeated up-and-down bending of one edge over an angle of 180 degrees (2 cycles/second). Measurement was carried out at both 20° C and -20° C. When it took more than 2000 cycles for cracks or breaking to occur in the hinge, repeat hingeability was judged to be good.

The present invention thus provides polybutylene terephthalate resin compositions whereby the resistance to repeated fatigue and the moldability of the molded bodies are both good.

Brief Description of the Diagrams

Fig. 1 is a cross-sectional diagram of a molded body having a hinge portion and a snap-fit portion: here, 1 is a molded body made of polybutylene terephthalate, 2 is the snap-fit portion and 3 is the hinge portion.

Fig. 2 is an enlarged diagram of the hinge portion of the molded body before it is bent.

Fig. 3 is a top view and a cross-sectional view of the molded body used to evaluate moldability and to judge the repeated hingeability in the examples of the invention and the comparative examples.

**Claims**

1. Polybutylene terephthalate resin composition comprising:

   [A] 60-99% of polybutylene terephthalate having a number-average molecular weight (Mn) larger than 40,000 but less than 60,000, and a weight-average molecular weight (Mw) of more than 130,000 but less than 160,000, and

   [B] 1-40 wt% of polybutylene terephthalate having a number-average molecular weight (Mn) larger than 21,000 but less than 27,000, and a weight-average molecular weight (Mw) larger than 40,000 but less than 65,000.

Fig. 1

Fig. 2

3mm

20mm

3mm

0.5mm

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 362 872 (SUMITOMO WIRING SYSTEMS, LTD) <br> * the whole document * <br><br> ----- | 1 | C08L67/02 //(C08L67/02, 67:02) |
| | | | **TECHNICAL FIELDS SEARCHED (Int. Cl.5)** |
| | | | C08L |

The present search report has been drawn up for all claims

| Place of search | Date of completion of the search | Examiner |
|---|---|---|
| THE HAGUE | 28 APRIL 1993 | DECOCKER L. |